(19) Europäisches Patentamt
European Patent Office
Office européen des brevets

(11) **EP 2 040 205 A1**

(12) **EUROPÄISCHE PATENTANMELDUNG**

(43) Veröffentlichungstag:
25.03.2009 Patentblatt 2009/13

(51) Int Cl.:
***G06Q 10/00*** *(2006.01)*

(21) Anmeldenummer: 07019736.3

(22) Anmeldetag: **09.10.2007**

(84) Benannte Vertragsstaaten:
**AT BE BG CH CY CZ DE DK EE ES FI FR GB GR
HU IE IS IT LI LT LU LV MC MT NL PL PT RO SE
SI SK TR**
Benannte Erstreckungsstaaten:
**AL BA HR MK RS**

(30) Priorität: **14.09.2007 EP 07018122**

(71) Anmelder: **SIEMENS AKTIENGESELLSCHAFT
80333 München (DE)**

(72) Erfinder: **Boulila, Naoufel, Dr.
80809 München (DE)**

(54) **Verfahren und Vorrichtung zum Echtzeitdatenaustausch**

(57) Verfahren zum Echtzeit-Datenaustausch zwischen Nutzern bei einer Entwicklung eines Modells durch mehrere Nutzer deren Client-Rechner in einem verteilten Netzwerksystem miteinander verbunden sind, wobei bei einer durch einen Nutzer an einem Client-Rechner lokal vorgenommen Änderung an dem auf einer graphischen Nutzeroberfläche des Client-Rechners angezeigten Modell eine syntaktische Beschreibung der Änderung von dem Client-Rechner zu den übrigen Client-Rechnern des verteilten Netzwerksystems gesendet wird.

## FIG 1

EP 2 040 205 A1

**Beschreibung**

Verfahren und Vorrichtung zum Echtzeitdatenaustausch

Die Erfindung betrifft ein Verfahren und eine Vorrichtung zum Echtzeitdatenaustausch zwischen Nutzern bei einer Entwicklung eines Modells durch mehrere Nutzer in einem verteilten Netzwerksystem.

Durch die zunehmende weltweite Vernetzung und Globalisierung erfolgt die Entwicklung technischer Einrichtungen zunehmend in verteilten Netzwerksystemen, wobei sich die Nutzer an verschiedenen Orten befinden und gemeinsam Artefakte, wie beispielsweise CAD-Modelle oder UML-Modelle, für Einrichtungen erstellen.

Zur Unterstützung der gemeinsamen Entwicklung von Gegenständen durch mehrere Nutzer an verschiedenen Orten in einem verteilten Netzwerk gibt es verschiedene Programme, die dies unterstützen, sogenannte Group-Ware. Group-Ware-Anwendungsprogramme unterstützen das Datenmanagement zwischen den Nutzern. Bei herkömmlichen Group-Ware-Programmen erfolgt das Datenmanagement entweder über eine zentralisierte Netzwerkarchitektur oder über einen dezentralen Datenaustausch zwischen den Nutzern.

Bei einer zentralisierten bzw. zentralen Netzwerkarchitektur sind die Daten der Nutzer in einem gemeinsamen Speicherplatz, insbesondere einer zentralen Datenbank, gespeichert und können von dort durch die Nutzer auf ihre Rechner geladen werden.

Bei einem dezentralen Datenaustausch zwischen Nutzern werden bei herkömmlichen Group-Ware-Programmen die Dateien bzw. Daten der Nutzer von einem Endgerät, beispielsweise einem PC, bei einer vorgenommenen Änderung an der Datei über das Netzwerk zu den anderen an der Entwicklung beteiligten Nutzern übertragen. Es wird beispielsweise ein UML-Modell oder ein CAD-Modell durch einen Nutzer bearbeitet und der Nutzer sendet nach einer vorgenommenen Änderung eine Update-Kopie an die übrigen Nutzer des Entwicklungsteams.

Diese herkömmliche Vorgehensweise hat einige Nachteile.

Selbst wenn die Dateien bzw. Daten zwischen den Nutzern über das Netzwerk in komprimierter Form übertragen werden, kommt es aufgrund der begrenzten Bandbreite bei der Datenübertragung zu erheblichen zeitlichen Verzögerungen, das heißt die Dauer der Datenübertragung ist relativ hoch. Dies ist besonders störend, wenn ein Entwicklungsteam gleichzeitig gemeinsam an einem Modell arbeitet, da die übrigen Nutzer des Teams auf die Modelländerung seitens des entfernten Nutzers warten müssen.

Darüber hinaus kann es bei der gemeinsamen Entwicklung mittels herkömmlicher Group-Ware-Programmen zu Inkonsistenzen kommen, wenn beide Nutzer gleichzeitig an einem Entwicklungsmodell arbeiten und bei der Versendung der upgedateten Dateien Oberkreuzungen stattfinden.

Es ist daher eine Aufgabe der vorliegenden Erfindung, ein Verfahren und eine Vorrichtung zum Echtzeitdatenaustausch zwischen Nutzern bei einer Entwicklung eines Modells durch mehrere Nutzer zu schaffen, bei der die Übertragungszeiten und Reaktionszeiten minimiert werden.

Diese Aufgabe wird erfindungsgemäß durch ein Verfahren mit den im Patentanspruch 1 angegebenen Merkmalen gelöst.

Die Erfindung schafft ein Verfahren zum Echtzeit-Datenaustausch zwischen Nutzern bei einer Entwicklung eines Modells durch mehrere Nutzer deren Client-Rechner in einem verteilten Netzwerksystem miteinander verbunden sind, wobei bei einer durch einen Nutzer an einem Client-Rechner lokal vorgenommen Änderung an dem auf einer graphischen Nutzeroberfläche des Client-Rechners angezeigten Modell eine syntaktische Beschreibung der Änderung von dem Client-Rechner zu den übrigen Client-Rechnern des verteilten Netzwerksystems gesendet wird.

Das erfindungsgemäße Verfahren hat den Vorteil, dass es bei der gemeinsamen Echtzeitentwicklung des Modells durch mehrere Nutzer nicht zu Inkonsistenzen zwischen verschiedenen Versionen bzw. Updates des Modells kommt.

In einer Ausführungsform des erfindungsgemäßen Verfahrens verändert der Nutzer eine graphische Ansicht des Modells oder das Modell selbst.

In einer Ausführungsform des erfindungsgemäßen Verfahrens wird das Modell durch Hinzufügen, Entfernen oder Kopieren von Modellelementen verändert.

Bei einer weiteren Ausführungsform des erfindungsgemäßen Verfahrens wird das Modell durch Ändern von Modellelement-Attributen verändert.

Bei einer weiteren Ausführungsform des erfindungsgemäßen Verfahrens wird die graphische Ansicht des Modells durch Verschieben und Umkopieren von Modellelementen verändert.

Bei einer Ausführungsform des erfindungsgemäßen Verfahrens wird die graphische Ansicht des Modells durch Scrollen eines Bildschirms des Client-Rechners verändert.

Bei einer Ausführungsform des erfindungsgemäßen Verfahrens wird die graphische Ansicht des Modells durch Umformen von Modellelementen verändert.

Bei einer Ausführungsform des erfindungsgemäßen Verfahrens wird die syntaktische Beschreibung der vorgenommenen Änderung in einer Nachricht übertragen.

Bei einer Ausführungsform des erfindungsgemäßen Verfahrens wird die syntaktische Beschreibung der vorgenommenen Änderung in einem Datenpaket gesendet.

Bei einer weiteren Ausführungsform des erfindungsgemäßen Verfahrens wird die Nachricht durch eine XML-Nachricht gebildet.

Bei einer Ausführungsform des erfindungsgemäßen Verfahrens wird die Nachricht durch eine XML-Nachricht gebildet.

Bei einer Ausführungsform des erfindungsgemäßen Verfahrens wird die syntaktische Beschreibung der vorgenommene Änderung zusätzlich an eine Modell-Datenbank gesendet.

Bei einer Ausführungsform des erfindungsgemäßen Verfahrens wird beim Öffnen der graphischen Nutzeroberfläche an einem Client-Rechner ein aktueller Modellzustand des Modells aus der Modell-Datenbank geladen.

Die Erfindung schafft ferner eine Vorrichtung zum Echtzeit-Datenaustausch zwischen Nutzern bei einer Entwicklung eines Modells durch mehrere Nutzer deren Client-Rechner in einem verteilten Netzwerksystem miteinander verbunden sind, wobei bei einer durch einen Nutzer an einem Client-Rechner lokal vorgenommenen Änderung an dem auf einer graphischen Nutzeroberfläche des Client-Rechners angezeigten Modell eine syntaktische Beschreibung der Änderung von dem Client-Rechner zu übrigen Client-Rechnern der verteilten Netzwerksysteme automatisch generiert und gesendet wird.

Bei einer Ausführungsform der erfindungsgemäßen Vorrichtung ist das Modell ein Objektmodell.

Bei einer Ausführungsform der erfindungsgemäßen Vorrichtung ist das Modell ein UML-Modell.

Bei einer Ausführungsform der erfindungsgemäßen Vorrichtung ist das Modell ein Mind-Mapping-Modell.

Bei einer Ausführungsform der erfindungsgemäßen Vorrichtung ist das Modell ein CAD-Modell.

Die Erfindung schafft ferner ein Computerprogramm mit Befehlen zur Durchführung eines Verfahrens zum Echtzeit-Datenaustausch zwischen Nutzern bei einer Entwicklung eines Modells durch mehrere Nutzer deren Client-Rechner in einem verteilten Netzwerksystem miteinander verbunden sind, wobei bei einer durch einen Nutzer an einem Client-Rechner lokal vorgenommenen Änderung an dem auf einer graphischen Nutzeroberfläche des Client-Rechners angezeigten Modell eine syntaktische Beschreibung der Änderung von dem Client-Rechner zu den übrigen Client-Rechnern des verteilten Netzwerksystems gesendet wird.

Die Erfindung schafft ferner einen Datenträger zum Speichern eines derartigen Computerprogramms.

Im Weiteren werden bevorzugte Ausführungsformen des erfindungsgemäßen Verfahrens und der erfindungsgemäßen Vorrichtung unter Bezugnahme auf die beigefügten Figuren zur Erläuterung erfindungswesentlicher Merkmale beschrieben.

Es zeigen:

Figur 1            ein Blockschaltbild einer möglichen Ausfüh- rungsform des erfindungsgemäßen Systems zum Echtzeit-Datenaustausch zwischen Nutzern bei einer dezentralen Entwicklung eines Modells;

Figur 2            ein Diagramm zur Erläuterung der Funktions- weise des erfindungsgemäßen Verfahrens zum Echtzeit-Datenaustausch zwischen Nutzern bei einer Modellentwicklung;

Figuren 3a, 3b, 3c   ein einfaches Beispiel zur Darstellung vorgenommener Änderungen bei einem Modell zur Erläuterung der Funktionsweise des erfindungsgemäßen Verfahrens;

Figur 4            ein Flussdiagramm zur Darstellung der Funktionsweise des erfindungsgemäßen Ver- fahrens zum Echtzeit-Datenaustausch zwi- schen Nutzern bei einer Modellentwick- lung.

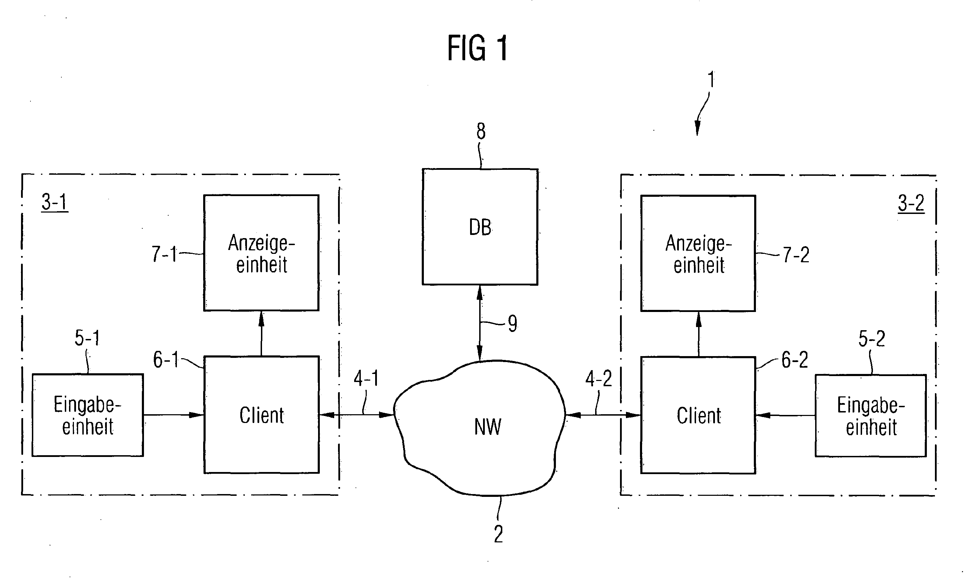

Wie man aus Figur 1 erkennen kann weist das erfindungsgemäße System 1 mindestens ein Netzwerk 2 auf, an dem Endgeräte 3-1, 3-2 angeschlossen sind. Die Endgeräte 3-1, 3-2 sind über eine drahtgebundene oder drahtlose Schnittstelle 4-1, 4-2 mit dem Netzwerk 2 verbunden. Bei dem Netzwerk 2 kann es sich um ein lokales Netzwerk oder einen Netzwerkverbund handeln. Bei dem Netzwerk 2 handelt es sich beispielsweise um das Internet.

Die beiden Endgeräte 3-1, 3-2 weisen jeweils wenigstens eine Eingabeeinheit 5, einen Client-Rechner 6 und eine Anzeigeeinheit 7 auf.

Bei dem in Figur 1 dargestellte Ausführungsbeispiel ist an dem Netzwerk 2 zusätzlich eine Datenbank bzw. Modell- Datenbank 8 angeschlossen, die man auch als Repository bezeichnen kann. Die Datenbank 8 ist über eine Schnittstelle 9 mit dem Netzwerk 2 verbunden. In einer möglichen Ausführungsform befindet sich die Datenbank 8 in einem an dem Netzwerk 2 angeschlossenen Server. In einer alternativen Ausführungsform sind die Endgeräte 3 nicht über das Netzwerk 2 sondern direkt mit der Datenbank 8 verbunden. Die beiden Client-Rechner 6-1, 6-2 der Endgeräte 3 sind über das verteilte Netzwerksystem, das heißt über das Netzwerk 2, miteinander verbunden. Die Anzeigeeinheiten 7-1, 7-2 zeigen auf einer graphischen Nutzeroberfläche beiden Nutzern jeweils den aktuellen Modellzustand eines Modells an. Bei dem Modell handelt es sich beispielsweise um ein UML-Modell, ein CAD-Modell oder um ein Mind-Mapping-Modell. Bei dem Modell kann es sich um ein beliebiges Modell eines Gegenstandes oder eines Prozesses handeln. Bei dem Modell kann es sich also auch um ein Minemapping-Modell handeln.

Bei einer von einem Nutzer an seinem Endgerät 3 vorgenommenen Änderung in dem Modell, das auf einer graphischen Nutzeroberfläche des Client-Rechners angezeigt wird, wird bei dem erfindungsgemäßen Verfahren eine syntaktische Beschreibung der Änderung von dem jeweiligen Client-Rechner 6 zu den übrigen Client-Rechnern des verteilten Netzwerksystems gesendet. Bei einer möglichen Ausführungsform des erfindungsgemäßen Systems 1 sind in den Client-Rechnern 6 Adressen von anderen Client-Rechnern gespeichert, die anderen Nutzern des gleichen Entwicklungsteams gehören. Diese Adressen sind durch den jeweiligen Nutzer konfigurierbar.

Bei einer vorgenommenen Änderung in einem Modell wird bei dem erfindungsgemäßen Verfahren keine Kopie des geänderten Modells an die übrigen Nutzer des Entwicklungsteams übertragen, sondern eine syntaktische Beschreibung der vorgenommenen Änderung. Anstatt die Quelldaten zu replizieren und zu übertragen, werden bei dem erfindungsgemäßen Verfahren Ereignisse (EVENTS) repliziert.

Bei dem erfindungsgemäßen Verfahren wird eine Beschreibung der an einem Client-Rechner 6 durch einen Nutzen an dem Modell vorgenommenen Interaktion übertragen, nicht eine Kopie des upgedateten Modellzustands. Die von einem Nutzer vorgenommene Änderung eines Modells kann eine Veränderung an dem Modell selbst sein oder eine Änderung an einer graphischen Ansicht des Modells.

Eine vorgenommene Änderung an dem Modell selbst umfasst beispielsweise das Hinzufügen, Entfernen oder Kopieren von Modellelementen. Weiterhin kann das Modell beispielsweise durch Ändern von Modellelementattributen verändert werden.

Eine graphische Ansicht des Modells wird durch den Nutzer beispielsweise durch Verschieben und Umkopieren von Modellelementen verändert. Eine weitere Möglichkeit, die graphische Ansicht eines Modells durch einen Nutzer zu ändern besteht darin, einen auf der Anzeigeeinheit 7 angezeigten Bildschirm zu scrollen. Eine weitere Möglichkeit die graphische Ansicht eines Modells durch einen Nutzer zu ändern besteht darin, Modellelemente zu verformen bzw. umzuformen.

Bei dem erfindungsgemäßen Verfahren wird eine syntaktische Beschreibung der vorgenommenen Änderung oder mindestens einer Nachricht über das Netzwerk 2 an die übrigen Client-Rechner 6 des Entwicklerteams in Echtzeit übertragen. Beispielsweise wird die syntaktische Beschreibung der vorgenommenen Änderung in einem oder mehreren Datenpaketen vom Endgerät 3 des ändernden Nutzers an die Endgeräte der übrigen Nutzer des Entwicklungsteams gesendet. Bei den übertragenen Nachrichten bzw. Datenpaketen handelt es sich beispielsweise um XML-Nachrichten oder XMI-Nachrichten.

Bei einer möglichen Ausführungsform des erfindungsgemäßen Verfahrens wird die syntaktische Beschreibung der vorgenommenen Modelländerung zusätzlich an die in Figur 1 dargestellte Modelldatenbank 8 gesendet. Dabei ist es möglich, dass ein Nutzer beim Öffnen der graphischen Nutzeroberfläche an seinem Client-Rechner 6 den aktuellen Modellzustand des Modells aus der Modelldatenbank 8 laden kann.

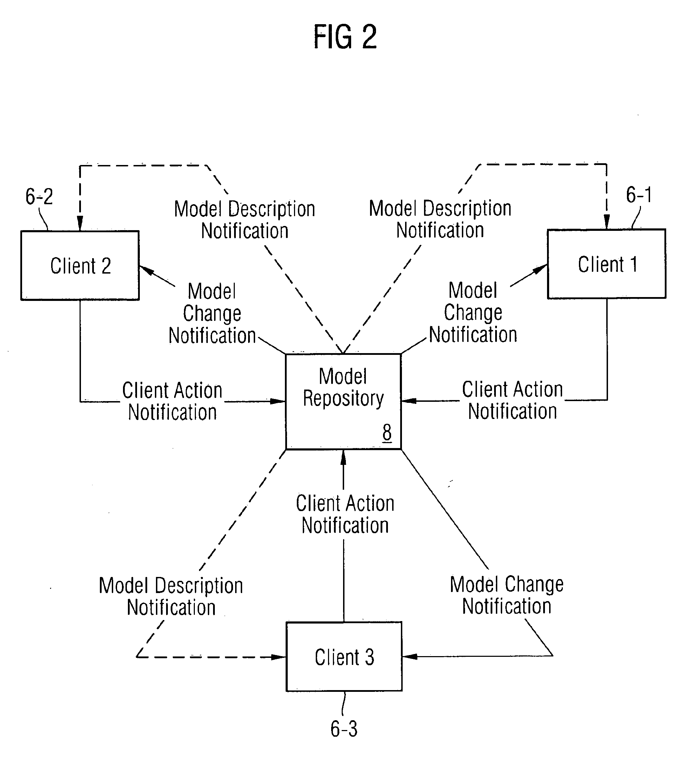

Figur 2 zeigt ein Diagramm zur Verdeutlichung die Funktionsweise des erfindungsgemäßen Systems 1, wie es in Figur 1 dargestellt ist.

Figur 2 zeigt ein aktives Datenverteilungsmodell. Um eine gute, das heißt kurze Antwortzeit zu erhalten, ist die zentrale Datenbank 8 vorgesehen, die einen aktuellen Modellzustand hält. Bei dem erfindungsgemäßen Verfahren werden nicht Kopien eines geänderten Modellzustandes übertragen, sondern die Aktionen der Nutzer werden repliziert und eine syntaktische Beschreibung der von dem Nutzer vorgenommenen Modelländerung, das heißt einer Änderung des Modells selbst oder eine Änderung der Modellansicht, wird an die übrigen Client-Rechner des verteilten Netzwerksystems gesendet, so dass diese die Modelländerung anschließend lokal vornehmen können. Bei einer Ausführungsform des erfindungsgemäßen Verfahrens erfolgt die lokale Modelländerung nach Empfang der syntaktischen Beschreibung von einem Endgerät 3 eines Nutzers automatisch. Bei einer alternaiven Ausführungsform wird der jeweilige Nutzer über den Empfang der syntaktischen Beschreibung informiert und kann dann die lokale Modelländerung durch einen Eingabe- bzw. Steuerbefehl veranlassen. Die Nachricht, welche die syntaktische Beschreibung der von einem anderen Nutzer vorgenommenen Modelländerung beinhaltet, zeigt bei einer möglichen Ausführungsform einen Aktionstyp und mögliche Parameter an. Das übertragene Datenpaket bzw. die übertragene Nachricht weist im Vergleich zu einer Kopie des aktuellen Modellzustands eine viel geringere Datengröße auf, so dass die Übertragungszeit und die Verarbeitungszeit auf Empfängerseite bei dem erfindungsgemäßen Verfahren vergleichsweise gering ist. Darüber hinaus ist die Datengröße der übertragenen syntaktischen Beschreibung weitgehend unabhängig von der Größe und der Komplexität des bearbeiteten Artefakts bzw. des Modells.

Bei dem erfindungsgemäßen System 1 erhalten die Nutzer lediglich eine Modellbeschreibung, welche in der Modelldatenbank 8 hinterlegt ist. Diese Modellbeschreibung kann beispielsweise beim Einschalten eines Endgerätes 3 durch einen Nutzer heruntergeladen werden. Nimmt ein Nutzer mit seinem Client-Rechner 6 eine Änderung an dem Modell vor, wird eine syntaktische Beschreibung der Änderung in einer Nachricht (notification) an die übrigen Nutzer und an einen Server, der an die Modelldatenbank 8 angeschlossen ist, übertragen. Diese Nachricht gibt die von dem Nutzer vorgenommene Aktion bzw. Änderung an (client action notification). Eine derartige Änderungsnachricht wird beispielsweise dann generiert und übertragen, wenn der Nutzer eine Gruppe von Modellelementen auf seinem Bildschirm bewegt oder selektiert. Des Weiteren wird eine Änderungsnachricht (client action notification) generiert und übertragen, wenn der Nutzer an seinem Arbeitsplatz den Bildschirm scrollt oder eine Ansicht erzeugt bzw. löscht. Weiterhin kann eine Nutzeränderungsnachricht zur Änderung der Größe oder Form eines Modellelements generiert werden oder wenn der Nutzer Icons auf seinem Bildschirm setzt.

Bei einer vorgenommen Änderung in einem Modellelement wird eine Modelländerungsnachricht (model change notification) an alle Nutzer, die mit dem Modellserver der Datenbank 8 verbunden sind, verteilt. Eine Modelländerung wird beispielsweise durch eine Updateaktion des Nutzers hervorgerufen. Eine derartige Updateaktion umfasst beispielsweise ein Update von Modellelement, wie beispielsweise von Namen, Attributen oder damit verbundenen Modellelementen. Weiterhin kann eine Updateaktion in dem Entfernen, Hinzufügen oder Duplizieren von Modellelementen bestehen.

Jeder Nutzer der Nutzergruppe bzw. des Entwicklungsteams, der sich ursprünglich bei dem Server der Modelldatenbank 8 als Nutzer des Entwicklungsteams anmeldet, erhält eine Nachricht zur Modellbeschreibung (model description notification). Nach Empfang der Beschreibungsnachricht (model description notification) kann der Nutzer das Modell entsprechend dem aktuellen Modellzustand lokal auf einem Client-Rechner generieren.

In dem erfindungsgemäßen Verfahren und dem erfindungsgemäßen System wird die Netzwerklast bzw. -menge an übertragenen Daten auf die lokalen Endgeräte 3 verlagert und das Netzwerk 2 selbst wird, entlastet.

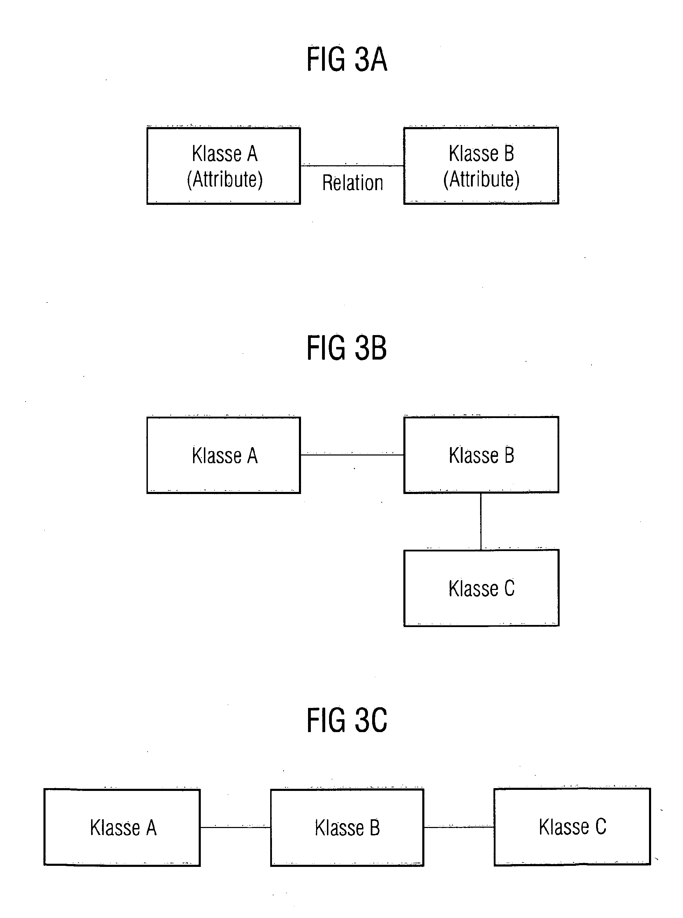

Figuren 3A, 3B, 3C dienen der Erläuterung des erfindungsgemäßen Verfahrens anhand eines Beispiels.

Bei dem Beispiel wird einem Nutzer auf einer Nutzeroberfläche der Anzeigeeinheit 7 ein einfaches UML-Modell angezeigt, wobei zwei Klassen A, B mit entsprechenden Attributen über eine Relation miteinander verbunden sind. Figur 3A zeigt den Ausgangszustand des Modells.

In Figur 3B wird ein Modellzustand nach einer vorgenommenen Änderung an dem Modell selbst dargestellt. Bei dem angegebenen Beispiel fügt der Nutzer an seinem Rechner ein zusätzliches Modellelement, nämlich eine weitere Klasse C, hinzu, die über eine Relation mit der Klasse B verbunden ist. Zur Vornahme der Modelländerung wird eine syntaktische Beschreibung dieser Modelländerung von dem Client-Rechner 6 des Nutzers an die übrigen Nutzer über das Netzwerk 2 übertragen. Auf Basis der empfangenen syntaktischen Beschreibung erfolgt die Modelländerung in den Client-Rechnern 6 der übrigen Nutzer lokal. Es wird dabei nicht eine Kopie des in Figur 3B dargestellten geänderten Modells übertragen, sondern lediglich eine syntaktische Beschreibung der vorgenommenen Änderung, so dass die übertragene Menge an Daten relativ gering ist.

Figur 3C zeigt eine weitere durch den Nutzer vorgenommene Änderung an dem UML-Modell. Bei dem dargestellten Beispiel verschiebt der Nutzer das auf dem Bildschirm dargestellte Modellelement der Klasse C unterhalb der Klasse B nach rechts. Diese vorgenommene Veränderung ändert das Modell selbst nicht, jedoch wird die graphische Ansicht des Modells verändert. Diese Veränderung der graphischen Ansicht des Modells wird als Aktion des Nutzers mit einer entsprechenden syntaktischen Beschreibung der vorgenommenen Änderung an die übrigen Client-Rechner 6 des Entwicklungsteams übertragen. Die vorgenommene Änderung wird dann auf der Empfangsseite lokal vorgenommen. Dadurch ist es möglich, dass die übrigen Nutzer in Echtzeit eine Änderung der graphischen Ansicht des Modells erleben bzw. erkennen können.

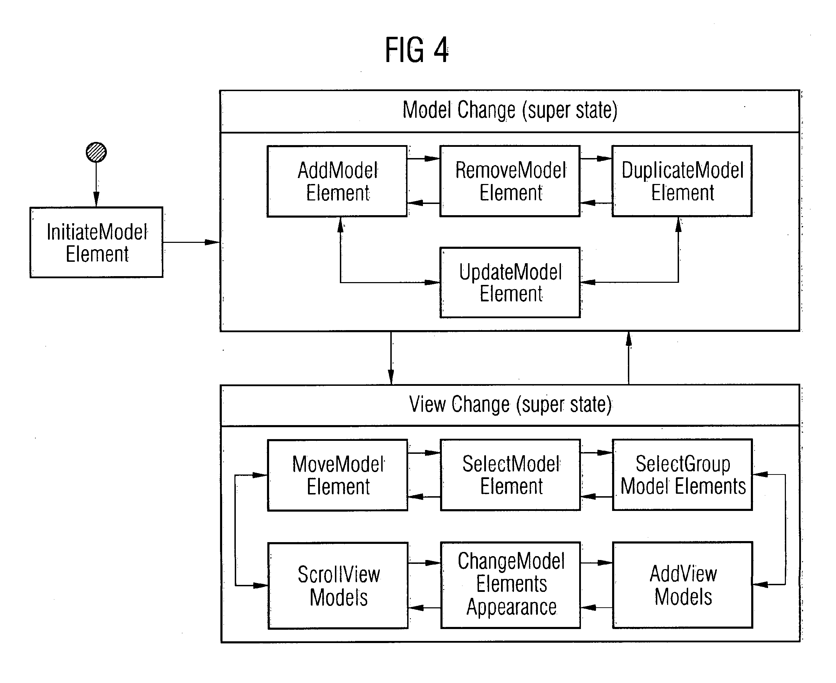

Figur 4 zeigt ein weiteres Diagramm zur Verdeutlichung des erfindungsgemäßen Verfahrens. Ein Nutzer kann zwei Hauptaktivitäten an einem Modell vornehmen, die die Antwortzeit beeinflussen. Ein Artefakt bzw. Modelelement kann erzeugt werden oder das erzeugte Modellelement kann upgedatet werden.

Die Erzeugung von Artefakten bzw. Modellelementen erfolgt vor allem in einer Anfangsphase des Entwicklungsprozesses, beispielsweise während Meetings und umfasst beispielsweise die Erzeugung von UML-Artefakten, Text oder Links zu externen Datenobjekten.

Updates bzw. Änderungen von Modellelementen, können beispielsweise das Updaten von UML-Artefakten etwa von Klassen, deren Attribute deren Position, auf dem Bildschirm umfassen.

Die Erzeugung von Modellelementen ruft den größten Datenumfang hervor, wenn die Artefakte, die von einem Client-Rechner erzeugt werden, an alle anderen Client-Rechner in Echtzeit übertragen werden. Jedes mal, wenn ein Nutzer ein Artefakt bzw. ein Modellelement generiert, werden bei einer möglichen Ausführungsform des erfindungsgemäßen Verfahrens die folgenden Schritte sukzessiv durchgeführt:

Das Artefakt bzw. Modellelement wird serialisiert.
Das Modellelement wird über das Netzwerk 2 übertragen.
Das Artefakt wird durch ein Anwendungsprogramm auf Empfängerseite geladen und auf der zugehörigen Anzeigeeinheit 7 angezeigt. Bei einer Änderung eines Modellelements werden weniger Obertragungsressourcen benötigt, da lediglich die Änderungen an den Modellelementen mit relativ geringer Datengrößen übertragen werden müssen.

Wie in Figur 4 dargestellt, umfasst eine Modelländerung einerseits eine Änderung des Modells selbst (model change) oder eine Änderung der Ansicht des Modells (view change)

Die Modelländerung kann beispielsweise das Hinzfügen eines Modellelements (add model elements), das Entfernen eines Modellelements (remove model element) und das Duplizieren bzw. Kopieren eines Modellelements (duplicate model element) umfassen. Weiterhin kann ein Modellelement upgedatet werden (update model element).

Eine Änderung der Modellansicht kann beispielsweise, wie in Figur 4 dargestellt, die Bewegung eines Modellelements auf dem Bildschirm (move model element), die Selektion eines Modellelements (select model element) oder die Selektion der Gruppe von Modellelementen (select group model elements) umfassen. Des Weiteren können die Änderungen der graphischen Ansicht des Modells das Scrollen des Bildschirms (scroll view models), das Hinzfügen von Modellansichten (add view models) oder die Veränderung der graphischen Darstellung eines Modellelements (change model element appearence) umfassen.

Mit dem erfindungsgemäßen Verfahren lassen sich Antwortzeiten selbst bei der Übertragung über MAN-Netzwerke (metropolitan area networks) verringern. Die Verringerung der Übertragungs-und Antwortzeiten gegenüber einer herkömmlichen GroupSoftware wird im erfindungsgemäßen Verfahren umso größer, je komplexer die jeweiligen Modelle sind.

Das bei dem erfindungsgemäßen Verfahren gegebene zeitliche Einsparungspotential kann sich aus folgender Überlegung ableiten lassen. Wenn man T1, T2, T3, T4 wie folgt definiert.

T1: Zeitpunkt einer Änderung, die auf Senderseite durch einen Nutzer initiiert wird,

T2: Zeitpunkt zu dem die vorgenommene Änderung auf Empfängerseite beobachtet wird,

T3: Netzwerklatenzzeit plus die von der Gesamtartefaktdatenmenge (total artefacts size) abhängige Übertragungszeit,

T4: Netzwerklatenzzeit plus die von der Eventgröße abhängige Übertragungszeit.

Zusätzlich wird berücksichtigt, dass die Gesamtartefaktgröße (total artefact size) von der Anzahl der Artefakte bzw. der Modellelemente, von der Größe der als Datenpakete übertragenen Artefakte, von der Anzahl der erzeugten Aktionen bzw. Ereignisse und von der Anzahl der verteilten Client-Rechner 6 der Nutzergruppe abhängt:

```
Total artefact size = (number of artefacts) x (size of pack-
aged artefact) x (number of events generated) x (number of
distributed clients).
```

Die Gesamtgröße der übertragenen Aktionen bzw. des übertragenen Ereignisses hängt von der Anzahl der Artefakte, der Größe der Events bzw. des übertragenen Ereignisses, der Anzahl der erzeugten Events bzw. Ereignisse und von der Anzahl der verteilten Client-Rechner 6 ab:

```
Total Event size = (numbers artefacts) x (size of events) x
(number of events generated) x (number of distributed cli-
ents).
```

Da die Datengröße einer übertragenen Aktion wesentlich geringer ist als die Datengröße eines in Datenpaketform übertragenen Artefakts ist die Aktionszeit des erfindungsgemäßen Verfahrens wesentlich geringer als bei herkömmlichen Group-Software-Programmen. Die Antwortzeit (response time) bei der Übertragung von Artefakten beträgt:

```
Response time (artefacts) = (T2+T3) — T1
```

Die Antwortzeit (response time) bei der Übertragung von Ereignissen bzw. Events gemäß dem erfindungsgemäßen Verfahren beträgt:

$$\text{Response time (events)} = (T2+T4) - T1.$$

Da T3 wesentlich größer ist als T4, gilt für die Antwortzeiten:

$$\text{Response time (events)} < \text{response time (artefacts)}\#$$

Die Reaktionszeiten sind daher bei dem erfindungsgemäßen Verfahren wesentlich geringer als bei herkömmlichen Verfahren.

**Patentansprüche**

1. Verfahren zum Echtzeit-Datenaustausch zwischen Nutzern bei einer Entwicklung eines Modells durch mehrere Nutzer deren Client-Rechner (6) in einem verteilten Netzwerksystem (1) miteinander verbunden sind, wobei bei einer durch einen Nutzer an einem Client-Rechner lokal vorgenommen Änderung an dem auf einer graphischen Nutzeroberfläche des Client-Rechners (6) angezeigten Modell eine syntaktische Beschreibung der Änderung von dem Client-Rechner (6) zu den übrigen Client-Rechnern des verteilten Netzwerksystems (1) gesendet wird.

2. Verfahren nach Anspruch 1, wobei der Nutzer eine graphische Ansicht des Modells oder das Modell verändert.

3. Verfahren nach Anspruch 2, wobei das Modell durch Hinzufügen, Entfernen oder Kopieren von Modellelementen verändert wird.

4. Verfahren nach Anspruch 2, wobei das Modell durch Ändern von Modellelement-Attributen verändert wird.

5. Verfahren nach Anspruch 2, wobei die graphische Ansicht des Modells durch Verschieben und Umgruppieren von Modellelementen verändert wird.

6. Verfahren nach Anspruch 2, wobei die graphische Ansicht des Modells durch Scrollen eines Bildschirms (7) des Client-Rechners verändert wird.

7. Verfahren nach Anspruch 2, wobei die graphische Ansicht des Modells durch Umformen von Modellelementen verändert wird.

8. Verfahren nach Anspruch 1, wobei die syntaktische Beschreibung der vorgenommenen Änderung in einer Nachricht übertragen wird.

9. Verfahren nach Anspruch 8, wobei die syntaktische Beschreibung der vorgenommenen Änderung in einem Datenpaket gesendet wird.

10. verfahren nach Anspruch 8, wobei die Nachricht durch eine XML-Nachricht gebildet wird.

11. verfahren nach Anspruch 8, wobei die Nachricht durch eine XMl-Nachricht gebildet wird.

12. Verfahren nach Anspruch 1, wobei die syntaktische Beschreibung der vorgenommenen Änderung zusätzlich an eine Modell-Datenbank (8) gesendet wird.

**13.** Verfahren nach Anspruch 12,
wobei beim Öffnen der graphischen Nutzeroberfläche an einem Client-Rechner (6) ein aktueller Modellzustand des Modells aus der Modelldatenbank (8) geladen wird.

**14.** Vorrichtung zum Echtzeit-Datenaustausch zwischen Nutzern bei einer Entwicklung eines Modells durch mehrere Nutzer deren Client-Rechner (6) in einem verteilten Netzwerksystem miteinander verbunden sind, wobei bei einer durch einen Nutzer an einem Client-Rechner (6) lokal vorgenommenen Änderung an dem auf einer graphischen Nutzeroberfläche des Client-Rechners (6) angezeigten Modell eine syntaktische Beschreibung der Änderung von dem Client-Rechner zu den übrigen Client-Rechnern des verteilten Netzwerksystems (1) automatisch generiert und gesendet wird.

**15.** Vorrichtung nach Anspruch 14,
wobei das Modell ein Objektmodell ist.

**16.** Vorrichtung nach Anspruch 15, wobei das Modell ein UML-Modell ist.

**17.** Vorrichtung nach Anspruch 14,
wobei das Modell ein Mind-Mapping-Modell ist.

**18.** Vorrichtung nach Anspruch 14, wobei das Modell ein CAD-Modell ist.

**19.** Computerprogramm mit Befehlen zur Durchführung des Verfahrens nach einem der Ansprüche 1-13.

**20.** Datenträger zum Speichern des Computerprogramms gemäß Anspruch 19.

FIG 1

EP 2 040 205 A1

# FIG 2

6-2

Client 2

Model Description
Notification

Model Description
Notification

6-1

Client 1

Model
Change
Notification

Model
Change
Notification

Client Action
Notification

Model
Repository

8

Client Action
Notification

Client Action
Notification

Model Description
Notification

Model Change
Notification

Client 3

6-3

## FIG 3A

```
┌──────────────┐              ┌──────────────┐
│   Klasse A   │   Relation   │   Klasse B   │
│  (Attribute) │──────────────│  (Attribute) │
└──────────────┘              └──────────────┘
```

## FIG 3B

```
┌──────────────┐              ┌──────────────┐
│              │              │              │
│   Klasse A   │──────────────│   Klasse B   │
│              │              │              │
└──────────────┘              └──────┬───────┘
                                     │
                              ┌──────┴───────┐
                              │              │
                              │   Klasse C   │
                              │              │
                              └──────────────┘
```

## FIG 3C

```
┌──────────┐        ┌──────────┐        ┌──────────┐
│ Klasse A │────────│ Klasse B │────────│ Klasse C │
└──────────┘        └──────────┘        └──────────┘
```

# FIG 4

EP 2 040 205 A1

**Europäisches Patentamt**

# EUROPÄISCHER RECHERCHENBERICHT

Nummer der Anmeldung

EP 07 01 9736

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 398 717 A (ATSMAI TECHNOLOGY [FR]) 17. März 2004 (2004-03-17) | 1-20 | INV. G06Q10/00 |
| X | * Spalte 10, Zeilen 49-56; Abbildung 6 * ----- | 1-20 | |

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| München | 3. März 2008 | Viets, Ana |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-03-2008

| Im Recherchenbericht angeführtes Patentdokument | Datum der Veröffentlichung | Mitglied(er) der Patentfamilie | Datum der Veröffentlichung |
|---|---|---|---|
| EP 1398717 A | 17-03-2004 | US 2004143605 A1 | 22-07-2004 |

Für nähere Einzelheiten zu diesem Anhang : siehe Amtsblatt des Europäischen Patentamts, Nr.12/82

EPO FORM P0461